Europäisches Patentamt

European Patent Office

Office européen des brevets

(19)

(11) Veröffentlichungsnummer: **0 079 535**
**B1**

(12) EUROPÄISCHE PATENTSCHRIFT

(45) Veröffentlichungstag der Patentschrift:
14.05.86

(21) Anmeldenummer: 82110182.1

(22) Anmeldetag: 05.11.82

(51) Int. Cl.⁴: **F 16 K 11/06, F 24 D 19/10**

(54) Umschaltventil.

(30) Priorität: 16.11.81 DE 3145827

(43) Veröffentlichungstag der Anmeldung:
25.05.83 Patentblatt 83/21

(45) Bekanntmachung des Hinweises auf die Patenterteilung:
14.05.86 Patentblatt 86/20

(84) Benannte Vertragsstaaten:
AT BE CH DE FR GB IT LI LU NL SE

(56) Entgegenhaltungen:
DE - A - 2 842 384
DE - B - 1 600 966
DE - C - 823 555
GB - A - 785 492
US - A - 2 192 835
US - A - 2 696 219
US - A - 3 385 321
US - E - 24 055

(73) Patentinhaber: Joh. Vaillant GmbH u. Co., Berghauser Strasse 40 Postfach 10 10 20, D-5630 Remscheid 1 (DE)
(84) Benannte Vertragsstaaten: DE IT LU SE

(73) Patentinhaber: COFRABEL N.V., Goldenhopestraat 15, B-1620 Drogenbos (BE)
(84) Benannte Vertragsstaaten: BE

(73) Patentinhaber: VAILLANT S.A.R.L, 4, Rue des Oliviers Orly-Sénia 326, F-94537 Rungis Cedex (FR)
(84) Benannte Vertragsstaaten: FR

(73) Patentinhaber: VAILLANT Ges.m.b.H, Forchheimergasse 7 Postfach 56, A-1233 Wien (AT)
(84) Benannte Vertragsstaaten: AT

(73) Patentinhaber: Vaillant Ltd., Vaillant Building, Aerodrome Way Heston Industrial Estate, GB-Hounslow, Middx. TW5 9QB (GB)
(84) Benannte Vertragsstaaten: GB

(73) Patentinhaber: SCHONEWELLE B.V., Ellermanstraat 17, NL-1099 BX Amsterdam (NL)
(84) Benannte Vertragsstaaten: NL

(73) Patentinhaber: Vaillant GmbH, Riedstrasse 8, CH-8953 Dietikon 1 (CH)
(84) Benannte Vertragsstaaten: CH LI

(72) Erfinder: Hellmann, Donald, Hoppenbeul 18, D-5860 Iserlohn (DE)
Erfinder: Schulz, Bernd, Am Kranen 9, D-5630 Remscheid-11 (DE)
Erfinder: Armbruster, Georg, Bergheimer Strasse 117, D-4100 Duisburg 14 (DE)

(74) Vertreter: Helm, Johann-Ludwig, Dipl.-Ing., c/o Joh. Vaillant GmbH u. Co Berghauser Strasse 40 Postfach 10 10 20, D-5630 Remscheid 1 (DE)

## Beschreibung

Die vorliegende Erfindung bezieht sich auf das Umschaltventil gemäss dem Oberbegriff des Hauptanspruchs.

Ein solches Umschaltventil ist in Form eines Drehschieberventils bekanntgeworden aus der DE-C-823 555. Bei diesem Drehschieber ist die bewegliche Scheibe mit zwei Nuten ausgeführt, die zueinander die Gestalt eines Regenschirms aufweisen, ohne miteinander in Verbindung zu treten. Es ist demgemäss eine halb ringförmige Nut und eine längliche Nut vorgesehen, deren Fertigung insbesondere bei Keramikteilen relativ aufwendig ist, wenn Sprungsicherheit und Dichtigkeit des Ventils zu gewährleisten sind.

Weiterhin ist aus der US-A- 3 385 321 auch ein vergleichbares Ventil bekanntgeworden, bei dem allerdings die bewegliche Scheibe eine kreissektorartige Nut und zwei Durchgangsbohrungen aufweist. Auch diese Scheibe ist relativ kompliziert nur zu fertigen. Beide Entgegenhaltungen decken übrigens alle Einlass- und Auslassbohrungen des Gehäuses ab. Der vorliegenden Erfindung liegt die Aufgabe zugrunde, ein insbesondere für Heizungsanlagen verwendbares Umschaltventil zu schaffen, mit dem eine Wärmequelle alternativ auf ein Heizungssystem oder einen anderen Verbraucher, beispielsweise einen Brauchwasserbereiter geschaltet werden kann, wobei auf einfachste Gestaltung der Scheiben, des Gehäuses und des Antriebs entscheidender Wert zu legen ist und die bewegliche Scheibe sich nur so weit erstecken soll, wie dies für die Funktion notwendig ist.

Die Lösung dieser Aufgabe gelingt mit den im kennzeichnenden Teil des Hauptanspruchs angegebenen Merkmalen.

Weitere Ausgestaltungen und besonders vorteilhafte Weiterbildungen der Erfindung gehen aus den Unteransprüchen sowie der nachfolgenden Beschreibung hervor, die ein Ausführungsbeispiel der Erfindung anhand der Figuren 1 bis 11 der Zeichnung näher erläutert. Es zeigen

Figur 1 ein Schaltschema unter Einbeziehung des Umschaltventils,
Figur 2 einen Schnitt durch das Umschaltventil entlang der Linie 2 - 2 in Figur 3
Figur 3 einen Schnitt durch das Umschaltventil entlang der Linie 3 - 3 in Figur 2,
Figur 4 eine Ansicht auf eine Gehäuseinnenseite,
Figur 5 eine Ansicht auf die Gehäuseaussenseite,
Figur 6 eine Keramikscheibe im Schnitt,
Figur 7 dieselbe Keramikscheibe in Ansicht,
Figur 8 die andere Keramikscheibe im Schnitt,
Figur 9 dieselbe Keramikscheibe in Ansicht,
Figur 10 beide Keramikscheiben in einer Funktionsstellung in Ansicht und
Figur 11 beide Keramikscheiben in einer anderen Funktionsstellung in Ansicht.

In allen elf Figuren bedeuten gleiche Bezugszeichen jeweils die gleichen Einzelheiten.

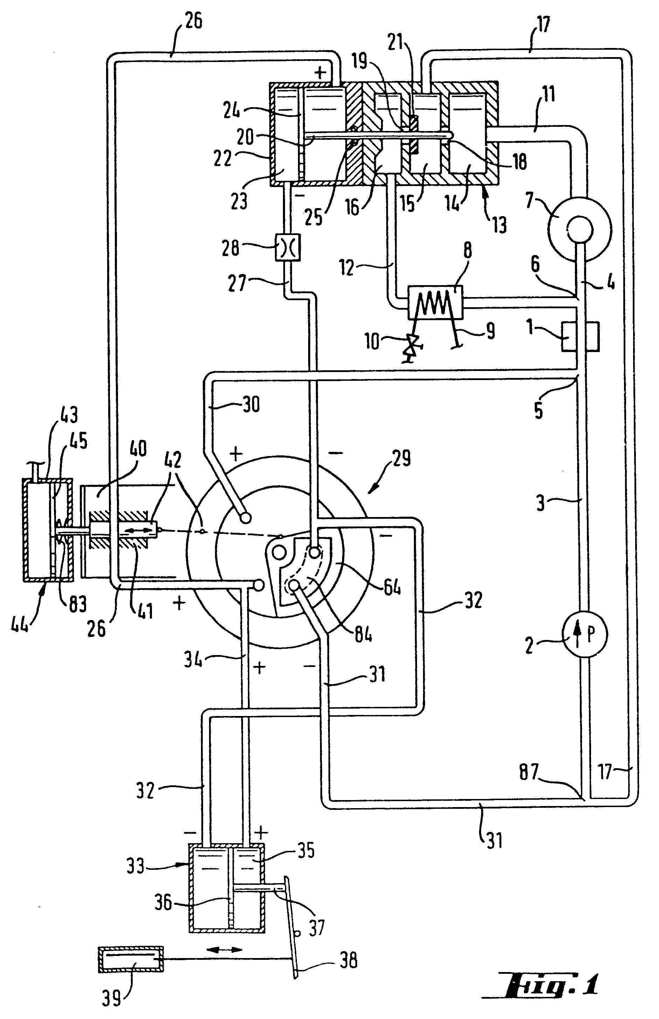

Bei dem in Figur 1 dargestellten Heizungssystem bedeutet 1 einen Erhitzer, dem in einem Umlauf über eine mit einer Umwälzpumpe 2 versehene Rücklaufleitung 3 kaltes Wasser aus dem Umlauf dem Rücklauf zugeführt wird. Von dem Erhitzer 1, der mit elektrischem Stom oder auch mit festen Brennstoffen gespeist sein kann, geht eine Vorlaufleitung 4 ab, die zu einer Verzweigungsstelle 6 führt, über die sich die Vorlaufleitung 4 einmal zu einer Vielzahl parallel und/oder in Serie geschalteter Heizkörper 7 beziehungsweise zu einem Brauchwasserwärmetauscher 8 fortsetzt, der von einer Kaltwasser-Zulaufleitung 9 durchsetzt ist, deren verbraucherseitiges Ende durch ein Zapfventil 10 verschliessbar ist.

Die Rücklaufleitungen 11 und 12 von den Heizkörpern beziehungsweise vom Brauchwasser-Wärmetauscher führen zu einem Umsteuerventilgehäuse 13, das Kammern 14, 15 und 16 aufweist. Die Kammer 14 steht mit der Leitung 11, die Kammer 16 mit der Leitung 12 in Verbindung. Die mittlere Kammer ist an eine Leitung 17 angeschlossen, die zu einer Verzweigungsstelle 87 führt, an der die Rücklaufleitung 3 abgeht, innerhalb derer die Pumpe 2 angeordnet ist.

Die Kammern 14 und 16 sind mit der Kammer 15 über Ventilsitze 18 und 19 verbunden, die von einem auf einer Betätigungsstange 20 angeordneten Ventilkörper 21 verschliessbar sind. Dem Ventilgehäuse 13 ist eine Betätigungsvorrichtung 22 zugeordnet, die aus einem Druckraum 23 und einem Stellkolben 24 besteht, mit dem die Betätigungsstange 20 verbunden ist, die gegenüber den Kammern 14 bis 16 durch einen O-Ring 25 abgedichtet ist. Beiderseits des Kolbens 24 münden in den Druckraum Druckleitungen 26 und 27, wobei in der Druckleitung 27 eine Rückströmdrossel 28 angeordnet ist.

Die Leitungen 26 und 27 sind mit dem Gehäuse 29 des erfindungsgemässen Umschaltventils verbunden. Weiterhin ist mit dem Gehäuse 29 eine Druckleitung 30 verbunden, die von einer Zweigstelle 5 von der Rücklaufleitung 3 abzweigt. Somit steht in der Leitung 30 der volle Pumpendruck an.

Von der Verzweigungsstelle 87 geht neben der Leitung 17 noch eine Leitung 31 ab, die gleichermassen zum Gehäuse 29 führt. Die Leitung 31 führt den geringstmöglichen Druck saugseitig der Pumpe. Auch die Leitung 27 ist an das Gehäuse 29 angeschlossen, innerhalb des Gehäuses 29 zweigt eine Leitung 32 ab, die zu einem Teillastschaltergehäuse 33 führt. Auch die Leitung 26 verzweigt sich innerhalb des Gehäuses 29, der Abzweig 34 führt gleichermassen zum Teillastschaltergehäuse. Das Teillastschaltergehäuse weist einen Druckraum 35 und einen Kolben 36 auf, der innerhalb des Gehäuses unter dem Einfluss der herrschenden Druckverhältnisse verschieblich ist und der mit einer Stellstange 37 verbunden ist, die über einen Hebel 38 eine Drosselblende 39 verstellen kann, die im Zuge einer den Erhitzer 1 speisenden Gasleitung liegt.

Falls der Erhitzer 1 mit elektrischem Strom gespeist ist, ist statt der Drossel 39 eine elektronische Phasenanschnittsteuerung vorgesehen, die die den Erhitzer speisende elektrische Leistung verlustlos und stufenfrei zu verstellen imstande ist.

Mit dem Gehäuse 29 des Vorrangumschaltventils ist ein Adapter 40 gekoppelt, der eine in einer Führung 41 verschieblich gelagerte Stellstange 42 aufweist. Die Stellstange arbeitet mit einem Wasserschalter 43 zusammen, der aus einer Druckkammer 44 und einem Kolben 45 besteht, der nach Massgabe der in der Druckkammer herrschenden Druckverhältnisse in seine eine oder andere (rechte oder linke) Endlage verschieblich ist. Der Kolben 45 ist mit der Stellstange 42 verbunden. Der Wasserschalter 43 ist im Zuge der Kaltwasserzuleitung 9 angeordnet, der Kolben 45 geht von der einen in die andere Endlage, wenn Kaltwasserdurchfluss durch die Leitung 9 durch Öffnen des Zapfventils 10 bewirkt wird.

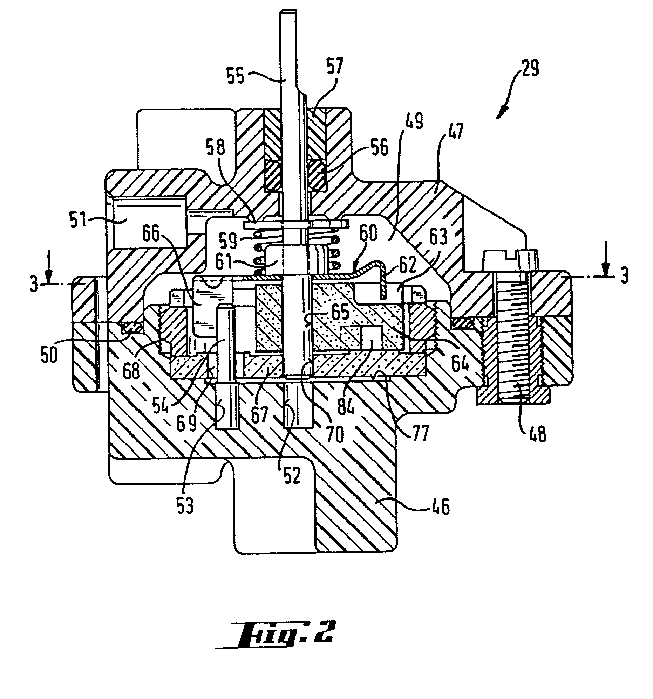

Das Gehäuse 29 des Umschaltventils ist, vergleiche Figur 2, aus Kuststoff gefertigt, es besteht aus einem Unterteil 46 und einem Oberteil 47, die beide durch Schrauben 48 längs ihres Umfangs miteinander verbunden sind. Zwischen Gehäuseober- und Unterteil ist ein freier Innenhohlraum 49 gebildet, der unter Zuhilfenahme einer O-Ring-Dichtung 50 gegenüber der Atmosphäre abgedichtet ist. Der Innenraum 49 steht über einen Anschlussstutzen 51 mit der Leitung 30 in Verbindung. Im Bereich des Innenraums 49 weist das Gehäuseunterteil 46 eine zylindrische Ausnehmung 52 und im Abstand dazu eine weitere zylindrische Ausnehmung 53 als Sacklöcher auf. In das Sackloch 53 ist ein Metallstift 54 eingefügt, das Sackloch 52 dient als Aussparung für Übermasse der Drehwelle 55, die durch den gesamten Innenraum 49 ragt und durch das Oberteil 47 unter Zwischenschaltung einer Dichtung 56 und einer Kunststoffführung 57 hindurchgeführt ist. An der Drehwelle 55 greift die Stellstange 42 an, und zwar über einen nicht dargestellten Drehhebel, der auf der Drehwelle 55 befestigt ist. Auf der Drehwelle 55 ist axial verschieblich ein Flansch 58 gelagert, gegen den sich eine Schraubendruckfeder 59 abstützt. An ihrem anderen Ende stützt sich die Schraubendruckfeder gegenüber einem Drehhebel 60 ab, der mit der Drehwelle 55 fest verbunden ist. Ein Distanzstück 61 dient zur Führung der Schraubendruckfeder. Der Drehhebel 60 weist eine Nase 62 auf, die in eine Ausnehmung 63 in einer drehbeweglichen zylindersektorartig geformten Scheibe 64 aus oxydkeramischem Werkstoff eingreift, die eine Lagerbohrung 65 aufweist, durch die die Drehwelle 55 greift. Der Drehhebel 60 weist einen Fühler 66 auf, der mit dem Metallstift 54 zusammenwirkt. Im Gehäuseunterteil 46 ist eine feste Scheibe 67 gleichfalls aus oxydkeramischem Werkstoff eingesetzt, die von einem Gewindering 68 gehalten ist, der mit seinem Aussengewinde in ein Innengewinde des Innenraums 49 eingreift. Die Keramikscheibe 67 weist eine Bohrung 69 auf, durch die der Metallstift 54 greift. Sie ist mit einer weiteren Bohrung 70 versehen, die von der Drehwelle 55 durchsetzt wird und als Lager für diese dient.

In der Figur 3 ist die eine Endstellung der beweglichen Scheibe 64 zu erkennen, die sich daraus ergibt, dass der Fühler 66 am Metallstift 54 anliegt. Die Stellung der beweglichen Scheibe ist damit so gehalten, dass eine der Bohrungen 71 in der feststehenden Scheibe 67 frei ist und somit mit dem Innenraum 49 und damit mit dem Anschlussstutzen 51 hydraulisch in Verbindung steht.

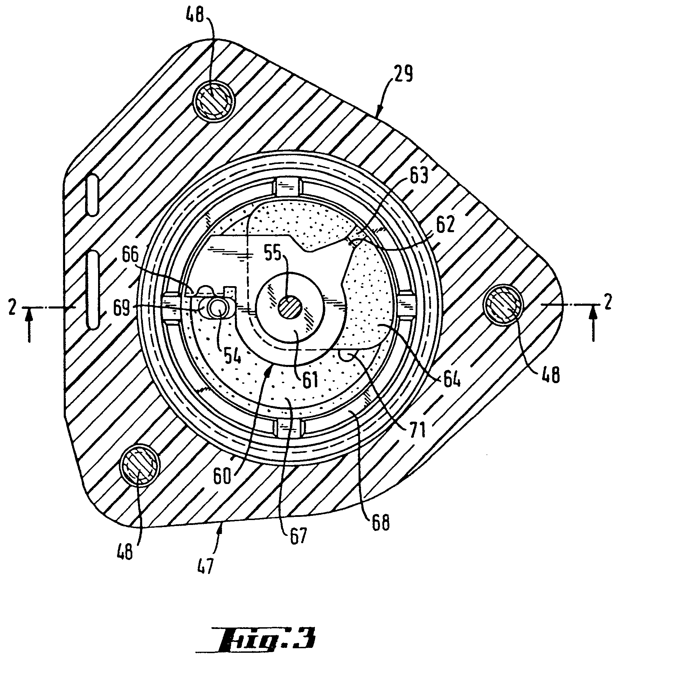

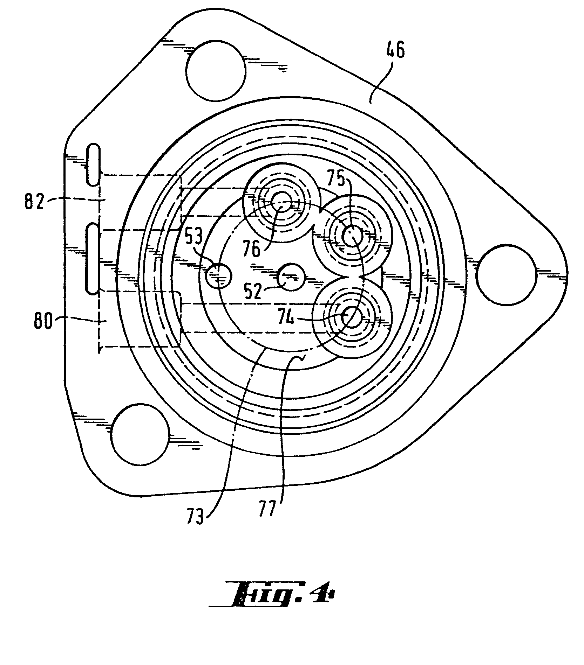

Aus den Figuren 4 und 5 geht das Gehäuseunterteil 46 näher hervor. Die Figur 4 zeigt das Gehäuseunterteil mit Blickrichtung auf die Unterseite des Innenraums 49 bei herausgenommener Scheibe 67 und herausgenommenem Metallstift 54. Es ist ersichtlich, dass im Unterteil fluchtend zu den Sacklöchern 52 und 53, aber im Abstand hiervon, gemeinsam auf einem Kreis 73 um das Sackloch 52 liegend, Bohrungen 74, 75 und 76 angeordnet sind, von denen die Bohrung 75 als mittlere Bohrung zwischen den Bohrungen 74 und 76 auf dem Kreis 73 liegt. Die Bohrungen erweitern sich im Bereich von einem Ansatz 72, in den ein nicht gezeichneter O-Ring eingelegt ist, der sich zwischen der Unterseite 77 des Innenraums 49 und der festen Keramikscheibe 67 abstützt. Damit werden die Innenräume der Bohrungen 74 - 76 gegenüber der Keramikscheibe abgedichtet.

Die die Gehäuseunterseite 46 in Ansicht von aussen darstellende Figur 5 zeigt, dass die Bohrung 75 zu einem Anschluss 78 führt, während die Bohrung 74 zu zwei Anschlüssen 79 und 80, die Bohrung 76 zu Anschlüssen 81 und 82 führt. Der Anschluss 80 ist mit der Leitung 27, der Anschluss 79 mit der Leitung 32 verbunden. Der Anschluss 82 ist mit der Leitung 34, der Anschluss 81 mit der Leitung 26 verbunden.

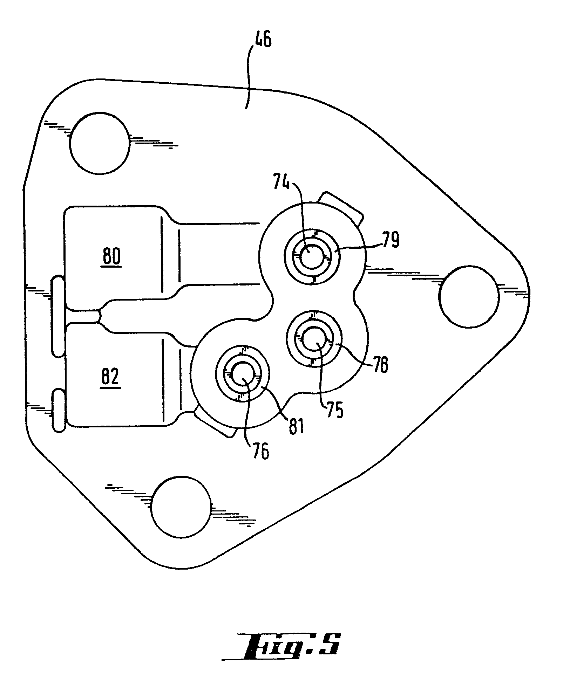

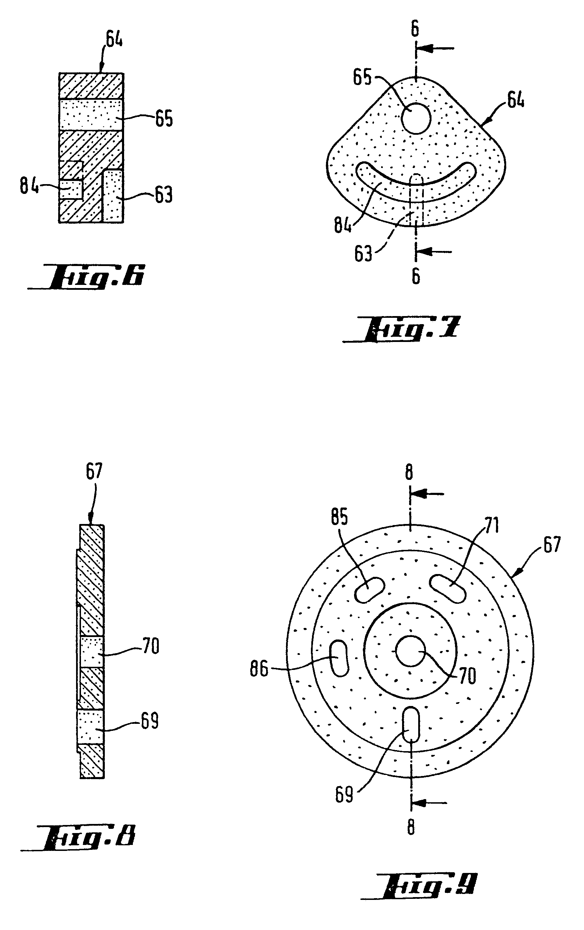

Die Figur 6 zeigt die drehbewegliche Scheibe 64 im Querschnitt, die Figur 7 in Ansicht, die Figur 8 zeigt die feststehende Scheibe 67 im Querschnitt und die Figur 9 in Ansicht. Hieraus geht hervor, dass die feste Scheibe 67 eine mittlere Bohrung 85 aufweist, die von zwei auf einem Kreisbogen danebenstehenden äusseren Bohrungen 71 und 86 flankiert sind. Durch den Kanal 84 wird je nach Stellung der drehbeweglichen Scheibe die Bohrung 85 entweder mit der Bohrung 86 oder mit der Bohrung 71 strömungsmässig in Verbindung gebracht.

Die dargestellte Heizungsanlage beziehungsweise das Umschaltventil besitzt folgende Funktion: Ausgehend von dem in Figur 1 dargestellten Schaltzustand, der der Speisung des Heizkreises durch den Erhitzer 1 entspricht, nimmt der Wasserschalter 43 seine Ruhestellung aufgrund der Rückstellwirkung einer Druckfeder 83 ein. Der Kolben 45 liegt damit in seiner linken Endstellung, die Keramikscheibe 64 liegt in der dargestellten Stellung. Das bedeutet, dass über den Ringkanal der Keramikscheibe 64, der an der feststehenden Scheibe 67 zugewandten Seite angebracht ist, die Bohrungen 75 und 74 miteinander verbunden sind. Durch diese Stellung der verdrehbaren Keramikscheibe 64 sind über den Innenraum 49 die Bohrung 76 mit Anschluss 81 verbunden. Das bedeutet, dass die Verzweigungsstelle 5 über die Leitung 30, den Innenraum 49 mit den Leitungen 26 und 34 verbunden ist. Das bedeutet weiterhin, dass der Kolben 24 seine linke, gezeichnete Endstellung einnimmt, so dass der Ventilkörper 21 den Ventilsitz 19 verschliesst. Als Folge hiervon steht die Pumpenrücklaufleitung 3 über die Verzweigungsstelle 87 mit der Kammer 15 in Verbindung, die wiederum über den offenen Sitz 18 mit der Leitung 11 in Verbindung steht. Das bedeutet weiterhin, dass über den in der Leitung 34 herrschenden Pumpendruck der Kolben 36 in seine linke Endstellung gefahren ist und dass über den Hebel 38 die Drossel 39 ihre Drosselstellung einnimmt. Dies bedingt eine Speisung des Erhitzers 1 mit Teilleistung.

Wird nun Zapfwasser gezapft durch Öffnen des Zapfventils 10, so wird der Wasserschalter 43 beaufschlagt, und der Kolben 45 fährt entgegen der Rückstellkraft der Feder 83 in seine rechte Endstellung. Hierbei wird die Stellstange 42 auf das Ventilgehäuse 29 bewegt, die Stange 42 verstellt über die Drehwelle 55 die bewegliche Keramikscheibe 64 aus der in der Figur 1 dargestellten Lage in die andere Lage. Diese ist durch die maximale Auslenkung des Wasserschalters gegeben. In dieser anderen Stellung verschwenkt die bewegliche Scheibe 64 in der Figur 1 im Uhrzeigersinn, so dass der Ringkanal 84 die Bohrung 75 nunmehr mit der Bohrung 76 verbindet. Aufgrund dieses Stellungswechsels ist die Bohrung 74 nunmehr mit dem Innenraum 49 verbunden und damit mit dem Anschluss 51. Als Folge dieser Vertauschung kehren sich die Druckverhältnisse in den Leitungen 26, 34 und 27, 32 um. Das bedeutet, dass der Kolben 24 seine andere Endlage einnimmt, worauf der Ventilkörper 21 den Ventilsitz 18 verschliesst, und den Ventilsitz 19 freigibt. Das bedeutet weiterhin, dass der Kolben 36 in die andere Endlage fährt, worauf die Drossel 39 ihren Maximalquerschnitt über den Hebel 38 freigibt. Nunmehr ist die Vorlaufleitung 4 des Erhitzers 1 nicht mehr mit den Heizkörpern 7, sondern mit dem Brauchwasser-Wärmetauscher 8 verbunden.

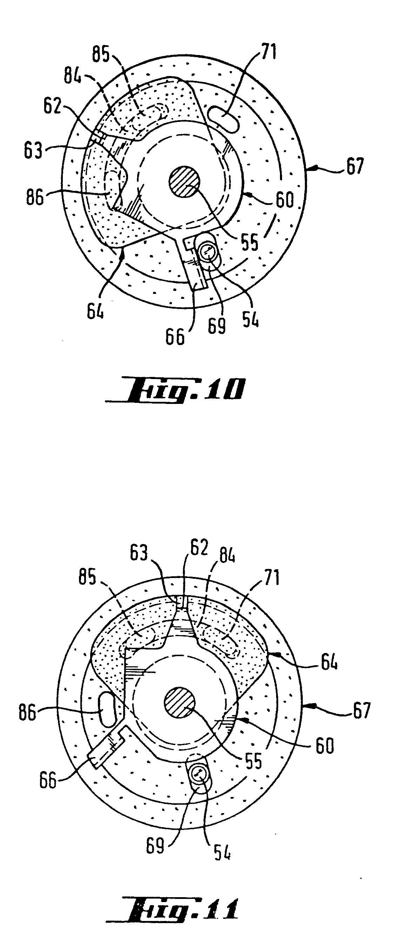

Beim Schliessen des Zapfventils 10 entfällt die Druckbeaufschlagung des Wasserschalters 43, und die Feder 83 stellt den Kolben 45 zurück. Als Folge davon wird auch das Umstellventil in die Ursprungslage zurückverstellt, und zwar so weit, bis die drehbewegliche Scheibe 64 aus der in der Figur 11 dargestellten Lage in die in der Figur 10 dargestellten Lage übergeht, die dadurch entsteht, dass der Fühler 66 gegen den Anschlag 54 läuft.

Zwischenstellungen sind möglich, wenn der Wasserschalterkolben durch geringere Druckbeaufschlagung nicht bis auf Endstellung gefahren wird, wodurch sowohl die Heizkörper 7 als auch der Brauchwasserbereiter 8 an der Wärmequelle 1 angeschlossen sind.

## Patentansprüche

1. Umschaltventil mit einem Gehäuse (29), einer darin gelagerten festen Scheibe (67) sowie einer an dieser anliegenden beweglichen Scheibe (64), die an einem Stellungsgeber (42, 43) angelenkt ist und die um eine mit der festen Scheibe (67) gemeinsame Mittelachse verdrehbar ist, und mit Anschlüssen (51, 75) für positiven und negativen Druck sowie Gehäuseanschlüssen (74, 76), die je nach Stellung der beweglichen Scheibe (64) mit dem einen oder anderen Druckanschluss (51, 75) verbindbar sind, dadurch gekennzeichnet, dass die feste Scheibe (67) drei Bohrungen (71, 85, 86) aufweist, die zu je einem Gehäuseanschluss (74, 75, 76) führen, und dass die bewegliche Scheibe (64) zylindersektorartig mit einem nur an einer Stirnseite ausgeführten Ringkanal (84) versehen ist und dass der Ringkanal (84) die mittlere Bohrung (85) mit jeweils einer der beiden anderen Bohrungen (71, 86) verbindet, wobei die nicht verbundene Bohrung von der beweglichen Scheibe nicht abgedeckt ist und mit einem der beiden Druckanschlüsse (51) verbunden ist, während der andere Druckanschluss (75) zur mittleren Bohrung (85) führt.

2. Umschaltventil nach Anspruch 1, dadurch gekennzeichnet, dass die feste Scheibe (67) eine vierte Bohrung (69) für einen gehäusefesten Anschlagstift (54) für die bewegliche Scheibe (64) aufweist, der durch die feste Scheibe hindurchreicht und in einem Teil des Gehäuses (46) befestigt ist.

3. Umschaltventil nach Anspruch 1 oder 2, dadurch gekennzeichnet, dass die bewegliche Scheibe (64) an ihrer dem Ringkanal (84) abgewandten, anderen Stirnseite eine Ausnehmung (63) aufweist, in die eine Nase (62) eines Drehhebels (60) eingreift, der mit einer Antriebswelle (55) verbunden ist.

4. Umschaltventil nach Anspruch 3, dadurch gekennzeichnet, dass der Drehhebel (60) neben der Nase (62) einen Fühler (66) aufweist, der mit dem Anschlagstift (54) zusammenwirkt.

5. Umschaltventil nach Anspruch 3 oder 4, dadurch gekennzeichnet, dass auf der Antriebswelle (55) eine Schraubendruckfeder (59) gelagert ist, die sich einerseits an dem einen Teil (47) des Gehäuses (29), andererseits gegenüber dem auf der beweglichen Scheibe (67) aufliegenden Drehhebel (60) abstützt.

6. Umschaltventil nach einem der Ansprüche 1 bis 5, dadurch gekennzeichnet, dass das Gehäuse (29) aus einem Ober- (47) und einem Unterteil (46) besteht und dass das eine der beiden Teile für die Bohrungen (71, 86) je ein Paar Anschlüsse (74, 80; 76, 82) aufweist, die innerhalb des Gehäuses miteinander verbunden sind.

7. Umschaltventil nach Anspruch 6, dadurch gekennzeichnet, dass in dem anderen Teil (47) des Gehäuses (29) ein einziger Anschlussstutzen (51) vorgesehen ist, der mit dem zwischen beiden Teilen gebildeten Innenraum (49) des Gehäuses (29) in Verbindung steht.

8. Umschaltventil nach einem der Ansprüche 3 bis 7 dadurch gekennzeichnet, dass die Antriebswelle (55) für die drehbewegliche Scheibe (67)
von einem Wasserschalter (43) gegen die Rückstellkraft einer Feder (83) angetrieben ist, der im
Zuge einer Kaltwasser-Zapfleitung (9) angeordnet ist.

## Claims

1. A change-over valve comprising a housing
(29), a fixed disc (67) mounted in said housing, a
movable disc (64), which contacts said fixed disc
and is pivoted to a position control element (42,
43) and is rotatable about a center line which is
common to the fixed discs (67), ports (51,75) for
positive and negative presser and housing
ports (74, 76) which are adapted to be connected
to one or the other of the pressure ports (51, 75)
in dependence on the position of the movable
disc (64), wherein the fixed disc (67) has three
bores (71, 85, 86), which lead to respective housing ports (74, 75, 76), the movable disc (64) is provided like a sector of a cylinder with an arcuate
passage (84), which extends only on one side, the
arcuate passage (84) is adapted to connect the intermediate bore (85) to each of the two other
bores (71, 86) and the unconnected bore is not
covered by the movable disc and is connected to
one of the two pressure ports (51) whereas the
other pressure port (75) leads to the intermediate
bore (85).

2. A change-over valve according to claim 1,
characterized in that the fixed disc (67) has a
fourth bore (69) for a pin (54) which is fixed to the
housing and constitutes a stop for the movable
disc (64) and said pin extends through the fixed
disc and is secured in one part of the housing
(46).

3. A change-over valve according to claim 1 or
2, characterized in that the movable disc (64) is
provided with a recess (63) on that end face
which faces away from the arcuate passage (84)
and said recess receives a nose (62) of a turning
lever (60), which is connected to a drive shaft
(55).

4. A change-over valve according to claim 3,
characterized in that the turning lever (60) has
beside the nose a feeler (66), which cooperates
with the stop pin (54).

5. A change-over valve according to claim 3 or
4, characterized in that a helical compression
spring (59) is mounted on the drive shaft (55) and
bears at one end on said one part (47) of the housing and its other end on the turning lever (60),
which bears on the movable disc (67).

6. A change-over valve according to any of
claims 1 to 5, characterized in that the housing
(29) consists of an upper part (47) and a lower
part (46) and one of the two parts has for each
bore (71, 86) a pair of ports (74, 80; 76, 82), which
communicate with each other inside the housing.

7. A change-over valve according to claim 6,
characterized in that a single connecting pipe (51)
is provided in the other part (47) of the housing
(29) and communicates with the interior space
(49) provided in the housing (29) between said
two parts.

8. A change-over valve according to any of
claims 3 to 7, characterized in that the drive shaft
(55) for the rotatable shaft (67) is driven against
the restoring force of a spring (83) by a water-
driven actuator (43), which is arranged in a cold
water tap line (9).

## Revendications

1. Organe distributeur comprenant un corps
(29), une plaquette fixe (67) logée dans ce corps,
ainsi qu'une plaquette mobile (64) en contact
avec la plaquette fixe, la plaquette mobile étant
reliée à un mécanisme positionneur (42, 43) et
tournant autour d'un axe commun avec la plaquette fixe (67), le corps de distributeur étant
muni de raccords (51, 75) pour pressions positive
et négative, ainsi que de raccords (74, 76) qui, suivant la position de la plaquette mobile (64), sont
mis en communication avec l'un ou l'autre des
raccords (51, 75), caractérisé par le fait que la plaquette fixe (67) comporte trois trous (71, 85, 86)
communiquant chacun avec un raccord (74, 75,
76) du corps de distributeur, et que la plaquette
mobile (64) en forme de secteur de cylindre est
munie sur une face seulement d'une rainure
courbe (84), et que ladite rainure (84) met en
communication le trou moyen (85) avec l'un ou
l'autre trou (71, 86), le trou libre n'étant pas re-
couvert par la plaquette mobile et communiquant
avec l'un des deux raccords (51), l'autre raccord
(75) étant en communication avec le trou moyen
(85).

2. Organe distributeur suivant la revendication
1, caractérisé par le fait que la plaquette fixe (67)
est munie d'un quatrième trou (69) où est logée
une broche fixe (54) pour la plaquette mobile (64),
la broche perçant la plaquette fixe et étant fixée
dans une partie (46) de corps de distributeur.

3. Organe distributeur suivant la revendication
1 ou 2, caractérisé par le fait que la plaquette mobile (64) est munie sur sa face opposée à celle
comportant la rainure courbe (84), d'un évidement (63) où s'engage un nez (62) d'un levier (60)
solidaire en rotation avec un axe (55).

4. Organe distributeur suivant la revendication
3, caractérisé par le fait que le levier (60) porte
outre le nez (62) un palpeur (66) qui coopère avec
la broche (54).

5. Organe distributeur suivant la revendication
3 ou 4, caractérisé par le fait que l'axe (55) porte
un ressort de poussée hélicoïdal (59) qui s'appuie
d'une part sur l'une partie (47) du corps de distributeur (29), et d'autre part sur le levier (60) reposant sur la plaquette mobile (67).

6. Organe distributeur suivant l'une des revendications 1 à 5 caractérisé par le fait que le corps
de distributeur (29) se compose d'une partie supérieure (47) et d'une partie inférieure (46), et que
l'une des deux parties présente des couples de
raccord (74, 80; 76, 82) reliée entre eux à l'intérieur du corps de distributeur et correspondant
aux trous (71, 86).

7. Organe distributeur suivant la revendication 6, caractérisé par le fait que dans l'autre partie (47) du corps de distributeur (29) est prévu une seule tubulure de raccordement (51) qui est en communication avec l'espace (49) entre les deux parties du corps de distributeur (29).

8. Organe distributeur suivant l'une des revendications 3 à 7, caractérisé par le fait que l'axe (55) pour la plaquette mobile (67) est commandé par un servomoteur (43), contre l'action d'un ressort (83), disposé dans une conduite d'alimentation en eau froide (9).

**Fig. 1**

*Fig. 2*

Fig. 3

Fig. 4

Fig. 5

**Fig.6**

**Fig.7**

**Fig.8**

**Fig.9**

**Fig. 10**

**Fig. 11**